# EUROPEAN PATENT APPLICATION

(11) **EP 1 793 622 A2**
(43) Date of publication of application: **06.06.2007**
(21) Application number: 06125121.1
(22) Date of filing: 30.11.2006
(51) Int. Cl.: H04N 9/804

(54) **Method and apparatus for storing digital broadcasting signal**

(30) Priority: 05.12.2005 KR 20050117666
(71) Applicant: Samsung Electronics Co., Ltd., Suwon-si 442-742 Gyeonggi-Do (KR)
(72) Inventor: Choi, Byoung-jin, Suwon-si, Gyeonggi-do (KR)
(74) Representative: Clark, David James

(57) **Abstract**

Provided are a method and an apparatus for storing a digital broadcasting signal, whereby only a specific language is stored when a multi-language broadcasting program is stored, or only a digital broadcasting signal part of a selected sub-channel is stored when a plurality of sub-channel digital broadcasting signals are included in a single channel. A received digital broadcasting signal (910) including at least one of multiple language data and a plurality of sub-channels data is stored by selecting at least one of a language and a sub-channel (920), extracting a transport stream packet corresponding to the at least one of the language and the sub-channel from the received digital broadcasting signal (930), and storing the extracted transport stream packet (940).

## Description

Methods and apparatuses consistent with the present invention relate to storing a digital broadcasting signal, and more particularly, to storing a digital broadcasting signal, whereby only a specific language is stored when a multi-language broadcasting program is stored, or only a digital broadcasting signal part of a selected sub-channel is stored when a plurality of sub-channel digital broadcasting signals are included in a single channel.

Digital broadcasting services are now available worldwide through various media such as terrestrial waves, satellite waves, and cables. Digital broadcasting in the Republic of Korea is at present divided into Advanced Television Systems Committee (ATSC)-based terrestrial broadcasting, Digital Video Broadcasting (DVB)-based satellite broadcasting, and OpenCable-based cable broadcasting. A transmitter providing a digital broadcasting service transmits a digital broadcasting signal in a transport stream (TS) packet format by compressing and multiplexing video, audio, and additional service information according to the MPEG-2 standard, and a receiver extracts the video, audio, and additional service information by parsing the TS packets and decodes the extracted video, audio, and additional service information.

As digital broadcasting has become more widely used, the significance of digital broadcasting signal storing apparatuses that store digital broadcasting signals has increased. Digital broadcasting signal storing apparatuses according to the related art store TS packets included in a predetermined frequency band selected by a user, as they are without filtering.

However, the amount of data contained in a digital broadcasting signal is very large, and the storage capacity of a digital broadcasting signal storing apparatus is limited. It is an aim of example embodiments of the present invention to address at least one problem associated with the prior art, whether identified herein, or otherwise.

According to an aspect of the present invention, there is provided a method of storing a digital broadcasting signal, the method comprising: receiving the digital broadcasting signal including at least one of multiple language data and/or a plurality of sub-channels data; selecting at least one of a language and a sub-channel; extracting a transport stream (TS) packet, corresponding to the at least one of the language and the sub-channel, from the received digital broadcasting signal; and storing the extracted TS packet.

In the selection of the at least one of the language and the sub-channel, the at least one of the language and the sub-channel may be selected according to at least one of a language and a sub-channel set in a currently watched digital broadcasting signal.

The selection of the at least one of the language and the sub-channel may further comprise: providing information on the at least one of the multiple language data and the plurality of sub-channels data available in the digital broadcasting signal to a user using Electronic Program Guide (EPG) information included in the received digital broadcasting signal; and storing information on the at least one of the language and the sub-channel to be stored, which is set by the user using the provided information on the at least one of the multiple language data and the plurality of the sub-channels data.

The extraction of the TS packet may comprise extracting the TS packet having the same packet identification (PID) as the at least one of the language and the sub-channel has by analyzing at least one of Program Specific Information (PSI) and Program and System Information Protocol (PSIP) data included in the received digital broadcasting signal.

The extraction of the TS packet may comprise: generating a Program Association Table (PAT) by analyzing PSI of the received digital broadcasting signal; generating a Program Map Table (PMT) from the PAT; and extracting the TS packet, having a PID corresponding to the at least one of the language and the sub-channel, using the PMT.

The extraction of the TS packet may further comprise: generating a Virtual Channel Table (VCT) by analyzing a PSIP of the received digital broadcasting signal; and extracting a TS packet, having a PID corresponding to the at least one of the language and the sub-channel, using the VCT.

The storing of the extracted TS packet may further comprise adding an arrival time stamp indicating an input time of the extracted TS packet to the stored extracted TS packet.

According to another aspect of the present invention, there is provided an apparatus for storing a digital broadcasting signal, the apparatus comprising: a tuner receiving the digital broadcasting signal including at least one of multiple language data and a plurality of sub-channels data; a controller selecting at least one of a language and a sub-channel; a packet extractor extracting a TS packet, corresponding to the at least one of the language and the sub-channel, from the received digital broadcasting signal; and a storage unit storing the extracted TS packet.

The controller may select the at least one of the language and the sub-channel according to at least one of a language and a sub-channel set in a currently watched digital broadcasting signal.

The controller may comprise: a broadcasting program information provider providing information on the at least one of the multiple language data and the plurality of sub-channels data available in the digital broadcasting signal to a user using EPG information included in the received digital broadcasting signal; and a setting storage unit storing information on the at least one of the language and the sub-channel, which is set by the user using the provided information on the at least one of the multiple language data and the plurality of sub-channels data.

The packet extractor may extract the TS packet having the same PID as the at least one of the language and the sub-channel data has by analyzing at least one of the PSI and PSIP data included in the received digital broadcasting signal.

The packet extractor may comprise: a PAT generator generating a PAT by analyzing PSI of the received digital broadcasting signal; a PMT generator generating a PMT from the PAT; and a filtering unit extracting the TS packet, having a PID corresponding to the at least one of the language and the sub-channel, using the PMT.

The packet extractor may comprise: a VCT generator generating a VCT by analyzing a PSIP of the received digital broadcasting signal; and a filtering unit extracting a TS packet, having a PID corresponding to the at least one of the language and the sub-channel, using the VCT.

The storage unit may add an arrival time stamp indicating an input time of the extracted TS packet to the stored extracted TS packet.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a configuration of a transport stream (TS) packet constituting a digital broadcasting signal, for use with exemplary embodiments of the present invention;
FIG. 2 illustrates program data and Program Specific Information (PSI) data included in a digital broadcasting signal for use with exemplary embodiments of the present invention;
FIG. 3 illustrates a Program Association Table (PAT) and Program Map Tables (PMTs) generated from the PSI data of FIG. 2;
FIG. 4 illustrates a configuration of a Virtual Channel Table (VCT) generated from a Program and System Information Protocol (PSIP) included in a digital broadcasting signal for use with exemplary embodiments of the present invention;
FIG. 5 is a block diagram of an apparatus for storing a digital broadcasting signal according to an exemplary embodiment of the present FIG. 6 is a block diagram of a controller of the apparatus of FIG. 5;
FIG. 7 is a block diagram of a packet extractor of the apparatus of FIG. 5;
FIG. 8 is a block diagram of an alternative embodiment of the packet extractor of the apparatus of FIG. 5; and
FIG. 9 is a flowchart illustrating a method of storing a digital broadcasting signal, according to an exemplary embodiment of the present invention.

The present invention will now be described more fully with reference to the accompanying drawings, in which exemplary embodiments of the invention are shown.

In a method and an apparatus for storing a digital broadcasting signal according to exemplary embodiments of the present invention, only specific language data corresponding to a language selected by a user is stored from multiple language data included in a single broadcasting program in multi-language broadcasting, or only specific sub-channel data corresponding to a sub-channel selected by the user is stored from a plurality of sub-channels in the digital broadcasting signal in a single frequency band.

A transport stream (TS) packet, which is a data transmission unit in a digital broadcasting signal, will now be described.

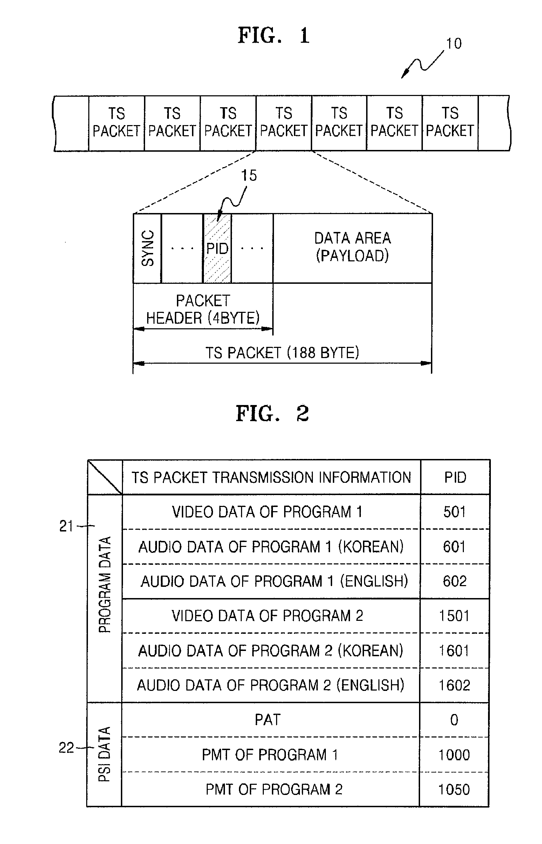

FIG. 1 is a configuration of a TS packet constituting a digital broadcasting signal 10.

Referring to FIG. 1, the digital broadcasting signal 10 is transmitted in a TS packet format according to the MPEG-2 standard, and a single TS packet is composed of a 4-byte packet header and a 184-byte data area (payload). The start of the packet header contains 8-bit sync information, and other information such as a 13-bit packet identification (PID) 15 having a binary value is also included in the packet header.

The PID 15 is assigned to every TS packet and used to identify which type of information out of video, audio, and additional data information is transmitted through the data area of the TS packet.

In the method and the apparatus for storing a digital broadcasting signal according to exemplary embodiments of the present invention, in order to extract a TS packet corresponding to a language and/or sub-channel pre-set by a user's selection, Program Specific Information (PSI) and/or Program and System Information Protocol (PSIP) data included in the digital broadcasting signal 10 are analyzed, and a TS packet having the same PID as the selected language and/or sub-channel is extracted.

A process of identifying TS packets of a received digital broadcasting signal using PSI will now be described.

PSI is information included in a data stream according to the MPEG-2 standard and provides information on a program specification, i.e., information on which one of a plurality of programs is selected, which packet is selected from the selected program, and how to decode the selected packet. The PSI includes four kinds of tables: a Program Association Table (PAT), which is specific information transmitted by a packet whose PID is 0, having PID values of Program Map Tables (PMTs), each PMT describing elements of each program; a PMT describing a program ID, and a PID list and affiliation information of TS packets containing individual video and audio bitstreams constructing a program; a Conditional Access Table (CAT) necessary for allowing only authorized users to decode and reproduce a bitstream scrambled to limit the reproduction; and a Network Information Table (NIT) having physical network information of a reception area.

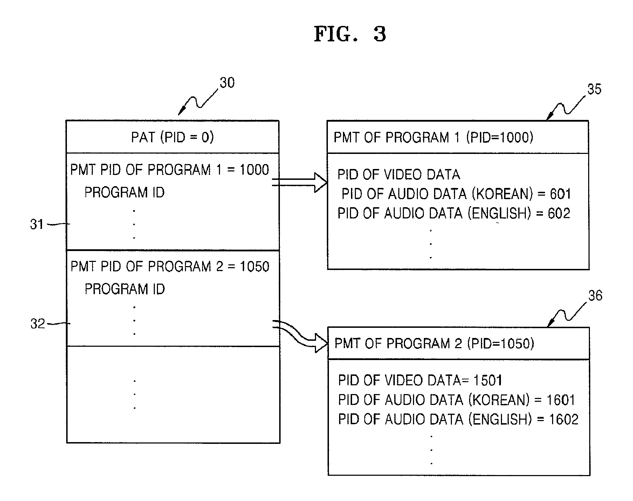

FIG. 2 illustrates program data 21 and PSI data 22 included in a digital broadcasting signal according to an exemplary embodiment of the present invention. FIG. 3 illustrates a PAT 30 and PMTs 35 and 36 generated from the PSI data 22 of FIG. 2, according to an exemplary embodiment of the present invention.

The digital broadcasting signal includes the program data 21 and the PSI data 22 to which unique PIDs are assigned and is time-division-multiplexed in a transmission packet basis. For example, referring to FIG. 2, a program 1 and a program 2 are included in a single channel, video data of the program 1 is transmitted using a TS packet whose PID is 501, Korean audio data of the program 1 is transmitted using a TS packet whose PID is 601, and English audio data of the program 1 is transmitted using a TS packet whose PID is 602. As described above, the PAT 30 can be generated by extracting TS packets whose PID is 0, PIDs of the PMTs 35 and 36 describing elements of broadcasting programs can be determined from the PAT 30, and a PID of a TS packet on which specific audio data of a specific program is carried can be determined from each of the PMTs 35 and 36. Referring to FIG. 3, it can be determined that a PMT PID of the program 1 is 1000 from the PAT 30 generated by extracting TS packets whose PID is 0, and through a TS packet whose PID is 1000, the PMT 35 describing elements of the program 1 is transmitted. Thus, PIDs of TS packets on which the video data, the Korean audio data, and the English audio data of the program 1 are carried can be determined from the TS packet whose PID is 1000.

Likewise, TS packets included in a received digital broadcasting signal can be identified using a PSIP included in the received digital broadcasting signal.

The PSIP is a protocol developed for system information and a program guide, and provides a broadcasting program guide including program events, program classifications, standard times, multi-language information, and sub-channel information besides watching channel information.

The PSIP includes a System Time Table (STT) presenting information about current date and time, a Master Guide Table (MGT) managing PIDs and versions of all tables except the STT, a Rating Region Table (RRT) having rating information on content, a Virtual Channel Table (VCT) having information on virtual channels, and an Event Information Table (EIT) and an Extended Text Table (ETT) for the program guide.

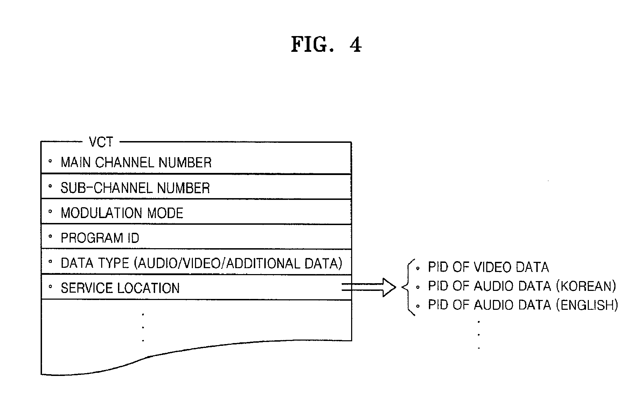

FIG. 4 illustrates a configuration of a VCT generated from a PSIP included in a digital broadcasting signal, according to an exemplary embodiment of the present invention.

Referring to FIG. 4, the VCT includes PID information of video data included in the digital broadcasting signal and PID information of audio data corresponding to each language in multi-language broadcasting, which are received similarly to a PMT of PSI data. Thus, if a specific language to be stored is selected, a PID of a TS packet in which the selected language is carried can be identified from the VCT.

A plurality of SD class sub-channel digital broadcasting signals can be included in a single channel. For example, if a High Definition (HD) class digital broadcasting signal is included in a single channel, around four SD class sub-channel digital broadcasting signals can be included in a single channel. Even if a plurality of SD class sub-channel digital broadcasting signals are included in a single channel, data of only a selected sub-channel included in the single channel is stored by extracting a TS packet having a PID corresponding to the selected sub-channel as in the case of extracting a TS packet having a specific PID from the multi-language digital broadcasting signal, thereby efficiently using the storage capacity.

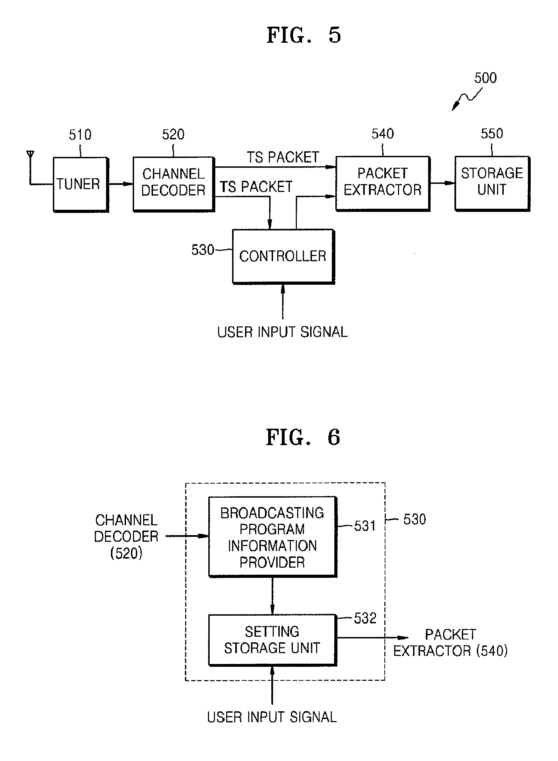

FIG. 5 is a block diagram of an apparatus 500 for storing a digital broadcasting signal according to an exemplary embodiment of the present invention.

Referring to FIG. 5, the apparatus 500 includes a tuner 510, a channel decoder 520, a controller 530, a packet extractor 540, and a storage unit 550.

The tuner 510 receives a digital broadcasting signal, including multiple language data and/or a plurality of sub-channels data, through an antenna and outputs the received digital broadcasting signal to the channel decoder 520.

The channel decoder 520 outputs TS packets by decoding the digital broadcasting signal input from the tuner 510.

The controller 530 selects a specific language to be stored from the multi-language digital broadcasting signal or a sub-channel to be stored when a plurality of sub-channel digital broadcasting signals are included in a single channel, and outputs information on the selected language and/or sub-channel to the packet extractor 540.

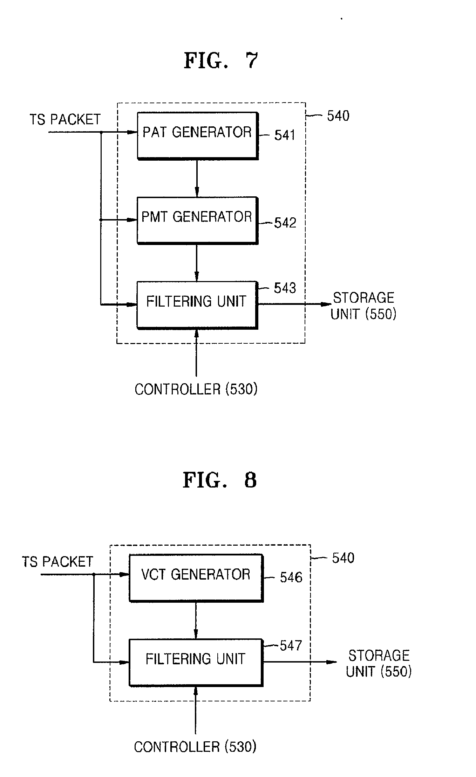

FIG. 6 is a block diagram of the controller 530 of FIG. 5. Referring to FIG. 6, the controller 530 includes a broadcasting program information provider 531 and a setting storage unit 532.

The broadcasting program information provider 531 provides a user with information on the multiple language data and/or the plurality of sub-channels data available in the digital broadcasting signal using Electronic Program Guide (EPG) information included in the received digital broadcasting signal.

The setting storage unit 532 stores information on the language and/or the sub-channel to be stored, which is set by the user selecting an immediate recording option or a reserved recording option through the EPG.

When the user selects the immediate recording option while watching a broadcasting program, the controller 530 can set a language and/or sub-channel to be stored according to setting information of the broadcasting program currently being watched by the user, i.e., according to which language and/or sub-channel the user has selected for watching. For example, if the user selects the immediate recording option while watching, in an English mode, a multi-language broadcasting program produced both in Korean and English, the controller 530 selects English as the language to be stored with respect to the multi-language broadcasting program. In addition, if the user selects the immediate recording option while watching a specific sub-channel broadcasting program among a plurality of sub-channel broadcasting programs, the controller 530 can select the specific sub-channel broadcasting program as the sub-channel broadcasting program to be stored with respect to the broadcasting program.

If the information on the language and/or sub-channel to be stored is input from the controller 530, the packet extractor 540 extracts a TS packet having a PID corresponding to the language and/or sub-channel to be stored by analyzing PIDs of the received TS packets.

FIG. 7 is a block diagram of the packet extractor 540 of FIG. 5, according to an exemplary embodiment of the present invention.

Referring to FIG. 7, when using the PSI included in the received digital broadcasting signal, the packet extractor 540 includes a PAT generator 541, a PMT generator 542, and a filtering unit 543.

The PAT generator 541 generates a PAT from TS packets whose PID is 0 among the TS packets of the received digital broadcasting signal. As described above, the PAT generated from the TS packets whose PID is 0 includes PID information of TS packets in which PMTs describing elements of each program are carried.

The PMT generator 542 generates, using the PAT generated by the PAT generator 541, a PMT describing a program ID, and a PID list and affiliation information of TS packets on which individual video and audio bitstreams constituting a program are carried.

The filtering unit 543 identifies, using the PMT, a PID of a TS packet in which data, corresponding to the information on the language and/or sub-channel to be stored, which is input from the controller 530, is carried, extracts only the TS packet having the identified PID, and outputs the extracted TS packet to the storage unit 550.

FIG. 8 is a block diagram of another exemplary embodiment of the packet extractor 540 of FIG. 5.

Referring to FIG. 8, when using the PSIP included in the received digital broadcasting signal, the packet extractor 540 includes a VCT generator 546 and a filtering unit 547.

The VCT generator 546 generates a VCT from the received digital broadcasting signal. The VCT includes a PID of video data included in the received digital broadcasting signal, PID information of audio data corresponding to multiple languages in the case of a multi-language broadcasting program, and PID information of sub-channel broadcasting data.

The filtering unit 547 identifies, using the VCT, a PID of a TS packet in which data, corresponding to the information on the language and/or sub-channel to be stored, which is input from the controller 530, is carried, extracts only the TS packet having the identified PID, and outputs the extracted TS packet to the storage unit 550.

Referring back to FIG. 5, the storage unit 550 stores only the TS packet of the specific language and/or sub-channel extracted by the filtering unit 543 or 547. The storage unit 550 adds an Arrival Time Stamp (ATS) indicating the time when the extracted TS packet is input to the apparatus 500 in the unit of TS packet, thereby using the ATS when a stored TS packet is reproduced. Examples of the storage unit 550 are hard disks, Blu-ray discs (BDs), digital versatile discs (DVDs), HD-DVDs, super-resolution recording media, magnetic storage media, optical recording media, and storage media such as carrier waves.

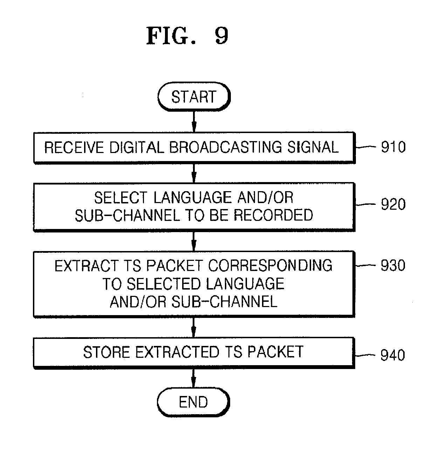

FIG. 9 is a flowchart illustrating a method of storing a digital broadcasting signal according to an exemplary embodiment of the present invention.

Referring to FIG. 9, in operation 910, a digital broadcasting signal including multiple language data and/or a plurality of sub-channels data is received.

In operation 920, a language and/or a sub-channel to be stored is selected from the multiple language data and/or the plurality of sub-channels. As described above, programs to be broadcast and affiliation information are previously provided to a user using EPG information included in the digital broadcasting signal, and if the user sets a broadcasting program to be stored and a language and/or sub-channel, a language and/or sub-channel to be stored can be selected according to these settings. In addition, if the user selects the immediate recording option while watching a broadcasting program, a language and/or sub-channel to be stored can be selected according to a language and/or sub-channel the user has selected for viewing.

In operation 930, a TS packet corresponding to the selected language and/or sub-channel is extracted among TS packets of the received digital broadcasting signal. As described above, when using PSI, a PID of a TS packet in which a specific language of a specific broadcasting program is carried can be identified from a PMT, and in the case of using a PSIP, a PID of a TS packet in which a specific language of a specific broadcasting program is carried can be identified from a VCT.

In operation 940, the extracted TS packet is stored in a predetermined storage medium. Here, for the reproduction of the stored digital broadcasting signal, a predetermined time stamp indicating an input time can be added to the extracted in every TS packet.

The method of storing a digital broadcasting signal according to an exemplary embodiment of the present invention can be written as computer programs. Codes and code segments for accomplishing the computer programs can be easily construed by programmers skilled in the art to which the present invention pertains. The computer programs are stored in a computer readable recording medium and embody the method of controlling a digital broadcasting signal by being read and executed by a predetermined operational device. Examples of the computer readable recording medium include magnetic storage media, optical recording media, and storage media such as carrier waves.

When a single digital broadcasting signal containing multiple languages, such as Korean, English, and French, is transmitted, digital broadcasting signal storing apparatus according to exemplary embodiments need not store entire TS packets containing multi-language information as they are. In addition, in digital broadcasting, three or four Standard Definition (SD)-class digital broadcasting programs can be carried on a single frequency channel (6 MHz) of conventional analog broadcasting using data compression technology. In this case, digital broadcasting signal storing apparatus according to exemplary embodiments need not store all three or four of the sub-channels included in a single frequency channel without filtering.

In this way, in relation to multi-language broadcasting or sub-channel broadcasting, unwanted TS data need not be stored, preventing the waste of storage space.

As described above, in a method and an apparatus for storing a digital broadcasting signal according to exemplary embodiments of the present invention, by selectively extracting and storing only TS packets of the digital broadcasting signal corresponding to a specific language and/or a specific sub-channel chosen by a user, the digital broadcasting signal can be stored more efficiently.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of storing a digital broadcasting signal comprising at least one of: multiple language data; and a plurality of sub-channels data, the method comprising:
receiving the digital broadcasting signal (910);
selecting at least one of: a language; and a sub-channel (920);
extracting a transport stream (TS) packet, corresponding to the at least one of the language and the sub-channel, from the received digital broadcasting signal (930); and
storing the extracted TS packet (940).

2. The method of claim 1, wherein, in the selecting of the at least one of the language and the sub-channel (920), the at least one of the language and the sub-channel is selected according to at least one of a language and a sub-channel set in a broadcasting program currently being viewed.

3. The method of claim 1 or 2, wherein the selecting of the at least one of the language and the sub-channel (920) further comprises:
providing information on the at least one of the multiple language data and the plurality of sub-channels data included in the digital broadcasting signal to a user using Electronic Program Guide (EPG) information included in the received digital broadcasting signal; and
storing information on the at least one of the language and the sub-channel, which is set by the user using the provided information on the at least one of the multiple language data and the plurality of sub-channels data.

4. The method of any preceding claim, wherein the extracting of the TS packet (930) comprises extracting the TS packet having a packet identification (PID) corresponding to the at least one of the language and the sub-channel by analyzing at least one of Program Specific Information (PSI) and Program and System Information Protocol (PSIP) data included in the received digital broadcasting signal.

5. The method of any preceding claim, wherein the extracting of the TS packet (930) comprises:
generating a Program Association Table (PAT) by analyzing Program Specific Information (PSI) of the received digital broadcasting signal;
generating a Program Map Table (PMT) from the PAT; and
extracting the TS packet, having a packet identification (PID) corresponding to the at least one of the language and the sub-channel, using the PMT.

6. The method of any preceding claim, wherein the extracting of the TS packet (930) comprises:
generating a Virtual Channel Table (VCT) by analyzing a Program and System Information Protocol (PSIP) of the received digital broadcasting signal; and
extracting the TS packet, having a packet identification (PID) corresponding to the at least one of the language and the sub-channel, using the VCT.

7. The method of any preceding claim, wherein the storing of the extracted TS packet (940) further comprises adding an arrival time stamp indicating an input time of the extracted TS packet to the stored extracted TS packet.

8. An apparatus for storing a digital broadcasting signal comprising at least one of: multiple language data; and a plurality of sub-channels data, the apparatus comprising:
a tuner (510) which receives the digital broadcasting signal;
a controller (530) which selects at least one of: a language; and a sub-channel;
a packet extractor (540) which extracts a transport stream (TS) packet, corresponding to the at least one of: the language; and the sub-channel, from the received digital broadcasting signal; and
a storage unit (550) which stores the extracted TS packet.

9. The apparatus of claim 8, wherein the controller (530) selects the at least one of the language and the sub-channel according to at least one of a language and a sub-channel set in a broadcasting program currently being viewed.

10. The apparatus of claim 8 or 9, wherein the controller (530) comprises:
a broadcasting program information provider (531) which provides information on the at least one of the multiple language data and the plurality of sub-channels data included in the digital broadcasting signal to a user using Electronic Program Guide (EPG) information included in the received digital broadcasting signal; and
a setting storage unit (532) which stores information on the at least one of the language and the sub-channel, which is set by the user using the provided information on the at least one of the multiple language data and the plurality of sub-channels data.

11. The apparatus of claim 8, 9 or 10, wherein the packet extractor (540) extracts the TS packet having a packet identification (PID) corresponding to the at least one of the language and the sub-channel by analyzing at least one of Program Specific Information (PSI) and Program and System Information Protocol (PSIP) data included in the received digital broadcasting signal.

12. The apparatus of claim 8, 9, 10 or 11, wherein the packet extractor (540) comprises:
a Program Association Table (PAT) generator (541) which generates a PAT by analyzing Program Specific Information (PSI) of the received digital broadcasting signal;
a Program Map Table (PMT) generator (542) which generates a PMT from the PAT; and
a filtering unit (543) which extracts the TS packet, having a packet identification (PID) corresponding to the at least one of the language and the sub-channel, using the PMT.

13. The apparatus of claim 8, 9, 10, 11 or 12 wherein the packet extractor (540) comprises:
a Virtual Channel Table (VCT) generator (546) which generates a VCT by analyzing a Program and System Information Protocol (PSIP) of the received digital broadcasting signal; and
a filtering unit (547) which extracts the TS packet having a packet identification (PID) corresponding to the at least one of the language and the sub-channel using the VCT.

14. The apparatus of any one of claims 8-13, wherein the storage unit (550) adds an arrival time stamp indicating an input time of the extracted transport stream packet to the stored extracted TS packet.
